# EUROPÄISCHE PATENTANMELDUNG

(11) **EP 2 314 935 A2**
(43) Veröffentlichungstag der Anmeldung: **27.04.2011**
(21) Anmeldenummer: 10460033.3
(22) Anmeldetag: 04.08.2010
(51) Int. Cl.: F24D 3/12, F24D 3/18

(54) **Panel, vorrangig Heizpanel**

(30) Priorität: 05.08.2009 PL 38872409
(71) Anmelder: Qdoor Sp. z o.o., 65-021 Zielona Góra (PL); Bartoszewski, Krzysztof, 01-926 Warszawa (PL)
(72) Erfinder: Bartoszewski, Krzysztof, 01-926 Warszawa (PL); Dzierzgowski, Mieczyslaw, 00-681 Warszawa (PL)

(57) **Zusammenfassung**

Heizelement, bestehend aus geheiztem Teil, das in sich ein hermetisch geschlossenes Arbeitsmedium beinhaltet, das teilweise den Außenraum des geheizten Teils ausfüllt, mit dem wärme abgebenden Teil, der aus einer Rohrleitung beliebiges Querschnittes besteht, mit einem Strahler auf seiner Länge fest verbunden und zusammengebunden mit der auf ihm an einer Seite aufgeklebten Dämmung, sowie einem Metallgitter, das die Oberfläche der Wärmeemission vergrößert.

## Beschreibung

Gegenstand der Erfindung ist ein Panel, vorrangig Heizpanel, bestimmt für die Heizung oder Kühlung von Räumen bei der Anwendung von Decken-, Wand- oder Fußbodeninstallationen, ohne für die Benutzer sichtbaren Installationselementen.

Aus der britischen Beschreibung des Patentes Nr. 1 064 379 GB ist ein Heizkörper für Beheizung von Räumen bekannt. Dieser Heizkörper hat Gestalt eines dichten, blechernen Panels, im dessen Innenraum sich verdampfende Flüssigkeit befindet. Der Unterteil des Heizkörpers wird halbkreisförmig gestaltet, so dass er an das Heizrohr genau anliegt. Er wird mit der Hilfe der halbkreisförmigen Bügelschelle befestigt. Die verdampfende Flüssigkeit wird von dem wärmeleitenden Rohr mittels Wärmeleitung in die Befestigungselemente aufgewärmt.

Ebenfalls aus der britischen Beschreibung des Patentes Nr. 2 099 980 GB ist ein Heizpanel bekannt, in seinem Unterteil dicht auf dem Heizrohr (dem wärmeleitenden Rohr) befestigt. Im Innenraum des Panels befindet sich die verdampfende Flüssigkeit, die das Heizrohr unmittelbar berührt. Auf dem Heizrohr ist ein Docht eingewickelt, der einen permanenten Kontakt des Heizrohrs mit der verdampfenden Flüssigkeit sichert.

Aus der europäischen Beschreibung des Patentes Nr. EP 043938 ist ein Wärmetauscher bekannt, aus geraden Rohrabschnitten bestehend, mit den auf ihrer inneren Rohroberfläche gestalteten Kreisrillen. Bei jedem Rohrabschnitt befindet sich längsseitig eine Scheidewand, die die Dampfzone festlegt. In der Flüssigkeitszone ist zusätzlich ein Band angebracht, das zur Trennung der aus dem Verflussigungsraum zurückkehrenden Flüssigkeit dient.

Aus der polnischen Beschreibung der mit dem Patent Nr. PL 178 544 geschützten Erfindung ist ein Wärmeaustauscher in der Form eines an beiden Enden geschlossenen Kreises bekannt. Er hat zwei getrennte Systeme, wobei sich im ersten System das aufgewärmte Arbeitsmedium verlagert, das die Wärme dem zweiten System mit gesonderten Medium abgibt.

Das Ziel der Lösung gemäß der Erfindung, ist Entwurf einer Panelkonstruktion , vorrangig Heizpanels, der sich durch Universalität, einfache Bauart charakterisiert und gleichzeitig durch eine hohe Heiz- und Kühlleistung auszeichnet, sich in wiederholbare Baugruppen in den Räumen auf solche Art und Weise zusammenbauen lässt, dass sie für einen Benutzer unsichtbar bleiben. Es geht um Erarbeitung solchen Panels, das seine Aufgaben der Sicherung der richtigen Heizung bzw. Kühlung eines Raums erfüllend die Kubatur des Raumes nicht verkleinert.

Der wesentliche Inhalt der Erfindung ist die Konstruktion des Panels, besonders Heizpanels. Dieses Panel besitzt ein Heizrohr, durch das das Arbeitsmedium durchfließt. Auf dem Heizrohr ist der Außenmantel zentriert aufgesetzt, der an einem Teil des Umfanges in Form der Bügelschelle gestaltet ist, die eng an das Heizrohr anliegt. Der Oberteil des Mantels ist nach oben ausgedehnt. Dieser ausgedehnte Teil des Außenmantels, an den Enden verschlossen, bildet eine Kammer, in welcher sich das verdampfende Medium befindet. Die Kammer des Außenmantels wird mit innerem Bereich der, in der Öffnung des oberen Kammerraums montierten Buchse verbunden, vertikal zum Außenmantel und zum Heizrohr. Die von oben geschlossene Buchse hat einen Querschnitt, der einem Dreieck nähert. Ihr, mit der Kammer des Außenmantels verbundener, Innenraum bildet einen hermetisch geschlossenen Raum, in welchem sich das verdampfende Medium befindet. Die gegenüberliegende Wand der Buchse wird bogenförmig gewölbt und an die Wand der Rinne des parabolischen Reflektors, die sich entlang der ganzen Länge der Buchse erstreckt, festgemacht. Der parabolische Reflektor wird aus einem auf ganzer Länge gekrümmten Flachstahl gefertigt, zwischen dessen geöffneten Seiten eine Rinne gebildet ist.

Auf der ganzen Länge der Buchse ist eine kapillare Rille gefertigt. Die inneren Wände der Buchse, sowie die Kammer des Außenmantels werden mit den spiralförmig verrenkten Durchpressungen ausgerüstet, die eine Wirbelung der Teilchen des verdampfenden Mediums erzwingen und dadurch den Wärmeaustausch verstärken. Die, nach oben stromenden, aufgewärmten Teilchen des verdampfenden Mediums in der Buchse geben die Wärme an die Umgebung ab, verflüssigen sich und kehren im flüssigen Zustand in die Kammer des Außenmantels zurück, wo nochmals ihre Erwärmung durch das, durch das Heizrohr durchfließende Heizmedium erfolgt. Die aufgewärmten Teilchen des verdampfenden Mediums strömen wirbelnd nach oben und geben die Wärme an die Umgebung ab. Die Buchse zusammen mit dem parabolischen Reflektor ist mit den Wärmeempfängern verbunden, vorteilhaft in der Form eines Gitters, das aus einem Werkstoff mit großer Wärmeleitfähigkeit ausgeführt ist, ähnlich, wie alle sonstigen Bestandelemente des Panels, gemäß der Erfindung. Das Gitter vergrößert die Oberfläche der Wärmestreuung und gleichzeitig verstärkt das Haften des Putzes bzw. des Anstriches an den Untergrund. Der Hinterteil des parabolischen Reflektors wird mit einem Dämmstoff überzogen, was die Ausstrahlung der Wärme in die Bautrennwände unmöglich macht und gleichzeitig die Ausstrahlung der Wärme in den Raum vergrößert.

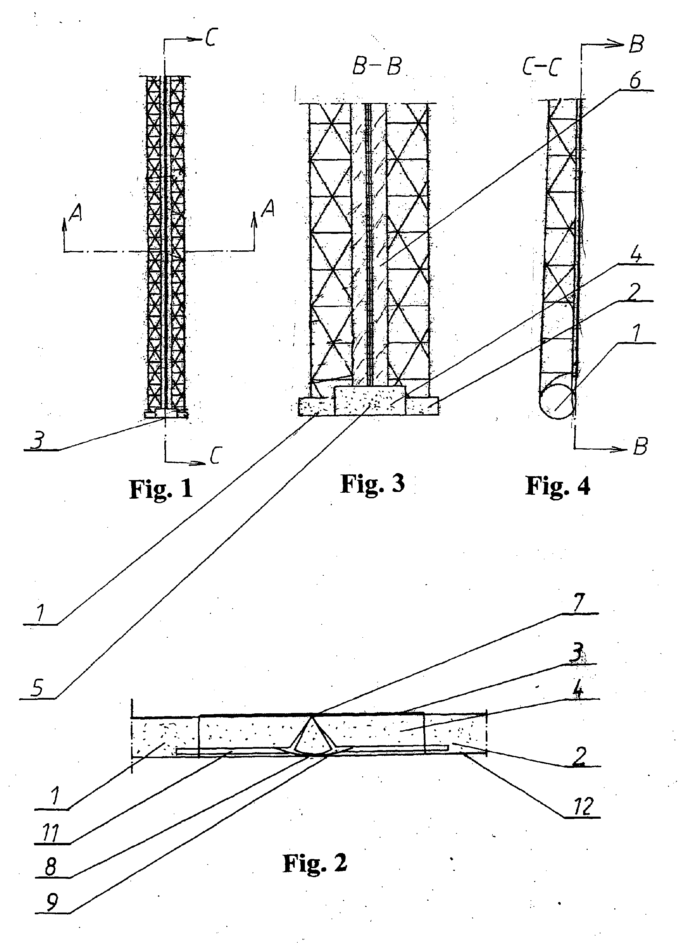

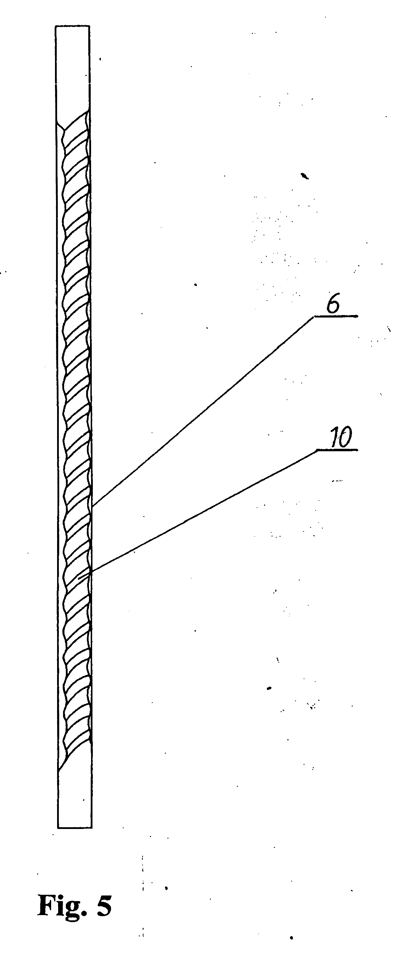

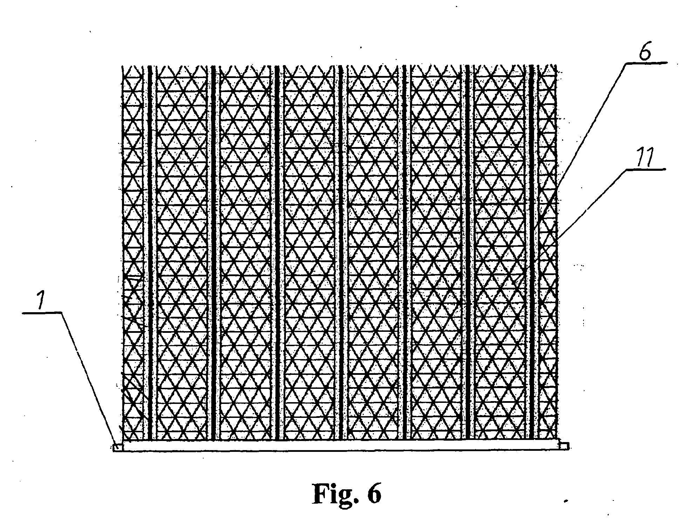

Die Lösung gemäß der Erfindung ermöglicht den Einsatz des Wechselphasensystems Dampf-Flüssigkeit-Dampf sowohl bei der Heizung, als auch bei der Kühlung von Räumen, bei der Anwendung in Decken-, Wand- oder Fußbodeninstallationen. Das Panel, gemäß der Erfindung, gibt die Möglichkeit die Installation unter dem Putz zu verstecken, wodurch sie für den Benutzer unsichtbar bleibt und trotzdem ihre Funktionen erfüllt. Der Vorteil der Lösung besteht außerdem darin, dass sie die Raumkubatur, die normalerweise in der traditionellen Technik der Raumbeheizung zusätzlich notwendig wäre, nicht verkleinert. Die Heizelemente in Form des Gitters erfüllen, außer ihrer grundsätzlichen Funktion der Vergrößerung der Oberfläche von Wärmestreuung, auch eine Rolle der Verstärkung der Haftkraft des Putzes an die rohen Oberflächen von Mauern.
Gegenstand der Erfindung wurde als Beispiel der Anfertigung auf der Zeichnung erklärt, wobei: Bild 1 - stellt das Panel, vorrangig Heizpanel in der allgemeinen Ansicht dar, Bild 2 - zeigt das Panel in einem Querschnitt A - A, Bild 3 - präsentiert das Panel im Längsschnitt B-B, Bild 4 - im Schnitt - C - C, und Bild 5 - zeigt die in eine Heizgruppe verbundenen Panels.

Das Panel, vorrangig Heizpanel laut Erfindung besitzt ein Heizrohr 1, durch das das Arbeitsmedium durchfließt 2. Auf dem Heizrohr 1 ist der Außenmantel 3 zentriert aufgesetzt, der an einem Teil des Umfanges in Form der Bügelschelle gestaltet ist. Der Außenmantel 3 auf dem Teil der Oberflache, die die Schelle bildet, liegt dicht an dem Heizrohr 1 an. Der Oberteil des Mantels 3 ist nach oben ausgedehnt. Dieser ausgedehnte Teil des Außenmantels 3, an den Enden verschlossen, bildet eine Kammer 4, in welcher sich das verdampfende Medium 5 befindet. Der Innenraum der Kammer 4 wird mit innerem Bereich der Buchse 6 verbunden, die in der Öffnung der oberen Wand 7 der Kammer 4 montiert ist. Die Buchse 6 ist vertikal zum Außenmantel 3 und zum Heizrohr 1 eingesetzt. Die von oben geschlossene Buchse 6 hat einen Querschnitt, der einem Dreieck nähert. Der Innenraum der Buchse 6 ist mit dem Innenraum der Kammer 4 des Außenmantels 3 verbunden und bildet einen hermetisch geschlossenen Raum, in welchem der Prozess der Aufwärmung des abdampfenden Mediums 5, Verwandlung in Dampf seiner nach oben strömenden Teilchen, Kühlung durch die Wärmeabgabe an die Umgebung, Verflüssigung und der Abfall in die Kammer 4 verläuft. Danach wiederholt sich dieser Prozess erneut. Auf der ganzen Länge der Buchse 6 wird eine kapillare Rille 7 gepresst.

Die gegenüberliegende Wand 8 der Buchse 6 ist bogenartig profiliert und an die Wand der Rinne des parabolischen Reflektors 9, die sich entlang der ganzen Länge der Buchse 6 erstreckt, fest fixiert. Der parabolische Reflektor 9 wird aus einem auf ganzer Länge geknufften Flachstahl angefertigt, zwischen dessen geöffneten Seiten w eine Rinne angefertigt ist. Die Innenwände der Buchse 6 und der Kammer 4 werden mit den spiralförmig verrenkten Durchpressungen 10 ausgerüstet, die die Wirbelung der Teilchen des verdampfenden Mediums 5 erzwingen und dadurch den Wärmeaustausch verstärken . Die Buchse 6 zusammen mit dem parabolischen Reflektor 9 werden mit den an beiden Seiten verteilten Wärmeempfängern verbunden. Die Wärmeempfänger haben eine Form des Gitters 11, das aus einem Werkstoff mit großer Wärmeleitfähigkeit hergestellt ist. Genauso aus Werkstoffen mit großer Wärmeleitfähigkeit sind das Heizrohr 1, der Außenmantel 3, die Kammer 4, die Buchse 6 und der parabolische Reflektor 9 hergestellt. Das Gitter 11 vergrößert die Oberfläche der Wärmestreuung, und verstärkt das Haften des Putzes an die Oberfläche der Mauer. Die hintere Oberfläche des parabolischen Reflektors 9 wird mit einem Dämmstoff 12 überzogen.

Gegenstand der Erfindung ist ein Heizelement, bestimmt vorrangig für die Beheizung von Räumen unter Verwendung der Phasenverwandlung Flüssigkeit-Dampf-Flüssigkeit, dass sowohl der vertikalen als auch waagerechten Lage arbeiten kann.

Das Ziel der Erfindung liegt in der Herstellung eines in seiner Konstruktion einfachen Heizelements, mit großem Wirkungsgrad, das die Wärme in der vertikalen und horizontalen Position übergeben kann. Die Lösung gemäß der Erfindung besteht darin, dass ein gerader Abschnitt der Rohrleitung des, die Wärme zerstreuenden Kondensators (8) auf seiner Länge auf diese Art und Weise durchgepresst ist, dass ein Kapillarkanal in seinem inneren Teil entsteht (7), durch den sich das verflüssigte Arbeitsmedium in den geheizten Teil (5) des Verdampfers verlagert. Dank dem entstandenen Kapillarkanal kann das Heizelement in der vertikalen und horizontalen Lage arbeiten. Auf der Außenoberfläche der Rohrleitung, auf seiner Länge, ist ein Strahler (Reflektor) (6) aus einem Material der großen Wärmeleitfähigkeit fes fgesetzt. Der Reflektor (7) hat das Ziel die Oberfläche der Wärmeemission an die Umgebung zu vergrößern. Auf einen so vorbereiteten Satz ist ein Gitter (11) aus einem Material der großen Wärmeleitfähigkeit aufgezogen, das zusätzlich die Oberfläche der Wärmeemission vergrößert und gleichzeitig eine Konstruktion für den aufzubringenden Putz an der Wand, auf der Decke oder für den Estrich auf dem Fußboden bildet. Auf der Rückseite der Abschirmung ist ein Dämmstoff (9) aufgeklebt, der die Wärmeemission in die Bautrennwand beschränkt, und die Wärmeabstrahlung in den Raum vergrößert. Solche Konstruktion des Heizelementes erlaubt die Anwendung des Phasenverwandlung-Systems Dampf-Flüssigkeit-Dampf für die Decken-, Wand-, Fußbodenheizung bzw. für die aus der Baustoff- bzw. Harzmassen abgegossenen Heizkörper. Durch den Unterkollektor (1) fließt das Heizmedium durch, die Verdampferkammer (4) vorwärmend, das das Sieden des Arbeitsmediums bewirkt. Die Dämpfe des Mediums dringen in den Kondensator ein (8) in dem sie sich nach der Abgabe der Wärmeenergie verflüssigen und in die Verdampferkammer (4) abfließen.

## Patentansprüche

1. Heizelement, bestehend aus einem angewärmten Teil (4) des Verdampfers, das in sich das hermetisch geschlossene Arbeitsmedium beinhaltet, das den Außenraum des Kollektors (1) ausfüllt, fest mit einem die Wärme abgegebenen Kondensator (8) verbunden, der eine Form der Rohrleitung beliebiges Querschnitts hat, **dadurch gekennzeichnet, dass** er auf seiner Länge auf diese Art und Weise durchgepresst ist, dass in seinem inneren Teil ein Kapillarkanal entsteht (7), durch den das verflüssigte Arbeitsmedium abfließt, und an der Außenoberfläche, auf der ganzen Länge, ein parabolischer Strahler (6) fest verbunden ist, auf den das Gitter (11) aus einem Material der guten Wärmeleitfähigkeit aufgezogen und ein Isolierband (9) aufgeklebt ist.

2. Heizelement nach Anspruch 1, **dadurch gekennzeichnet, dass** auf dem die Wärme abgebenden Teil des Kondensators auf seiner Länge eine kapillare Rille (7) durchgepresst ist.

3. Heizelement nach Anspruch 1, **dadurch gekennzeichnet, dass** der Kondensator auf seiner Länge, mit dem aus einem Werkstoff der guten Wärmeleitfähigkeit ausgefertigten parabolischen Reflektor (6), fest verbunden ist.

4. Heizelement nach Anspruch 1, **dadurch gekennzeichnet, dass** auf den mit dem parabolischen Reflektor (6) verbundenem Kondensator (8) ein Gitter (11) aus einem Werkstoff der großen Wärmeleitfähigkeit aufgezogen ist, mehrfach breiter, als der parabolische Reflektor.

5. Heizelement nach Anspruch 1, **dadurch gekennzeichnet, dass** auf der Rückseite des Kondensators (8) eine Dämmung der gleichen Breite wie der parabolische Reflektor (9) aufgeklebt ist.

6. Heizelement nach Anspruch 1, **dadurch gekennzeichnet, dass** man einen größeren, aus einigen Kondensatoren (8) bestehenden Heizsatz herstellen kann.

7. Heizelement nach Anspruch 1, **dadurch gekennzeichnet, dass** die Wärmeübergabe in seiner vertikalen und waagerechten Lage erfolgen kann.
